Europäisches Patentamt

European Patent Office

Office européen des brevets

(19)

(11) **EP 0 585 173 B1**

(12) **FASCICULE DE BREVET EUROPEEN**

(45) Date de publication et mention
de la délivrance du brevet:
**26.11.1997 Bulletin 1997/48**

(51) Int. Cl.$^6$: **B60M 1/06**, B60L 9/00,
B60M 3/00

(21) Numéro de dépôt: **93402083.5**

(22) Date de dépôt: **23.08.1993**

(54) **Filtre actif pour engin de traction alimenté sous catenaire monophasée**

Aktives Filter für Triebfahrzeug gespeist durch einen Einphasen-Fahrdraht

Active filter for traction unit fed by single phase catenary

(84) Etats contractants désignés:
**AT BE CH DE DK ES FR GB IE IT LI LU NL PT SE**

(30) Priorité: **25.08.1992 FR 9210259**

(43) Date de publication de la demande:
**02.03.1994 Bulletin 1994/09**

(73) Titulaire:
**GEC ALSTHOM TRANSPORT SA
75016 Paris (FR)**

(72) Inventeur: **Liu, Rong Fan
69100 Villeurbanne (FR)**

(74) Mandataire:
**Fournier, Michel et al
c/o ALCATEL ALSTHOM,
Département de Propriété Industrielle,
30, avenue Kléber
75116 Paris (FR)**

(56) Documents cités:
**DE-A- 3 725 515**

 • **PATENT ABSTRACTS OF JAPAN vol. 14, no. 420
(M-1023) (4363) 11 Septembre 1990 & JP-A-21
064 201 (TOSHIBA CORP) 25 Juin 1990**
 • **PATENT ABSTRACTS OF JAPAN vol. 007, no.
036 (E-158) 15 Février 1983 & JP-A-57 186 978
(TOKYO SHIBAURA DENKI KK) 17 Novembre
1982**
 • **PATENT ABSTRACTS OF JAPAN vol. 010, no.
105 (M-471) 19 Avril 1986 & JP-A-60 236 844
(MITSUBISHI DENKI KK) 25 Novembre 1985**

## Description

La présente invention concerne un filtre actif pour le filtrage du courant, et éventuellement l'amélioration du facteur de puissance, d'un engin de traction alimenté sous caténaire monophasée.

Les lignes de télécommunication disposées le long des voies ferrées peuvent être perturbées par l'action du courant de traction circulant dans la caténaire et retournant à la sous-station par le rail et le sol. Cet ensemble, formant des boucles génératrices de champ magnétique, peut perturber principalement les conducteurs aériens. Cette perturbation se manifeste d'autant plus si ces conducteurs ne sont pas protégés par une enveloppe métallique.

Les tensions perturbatrices engendrées sur les conducteurs à courant faible peuvent créer, en l'absence de protection, des dangers pour le personnel ou pour le matériel ainsi que des anomalies de fonctionnement. Le système de transmission du chemin de fer et le réseau public sont soumis à ces effets perturbateurs jusqu'à 2 ou 3 km de distance transversale.

Les engins de traction alimentés sous caténaire monophasée sont équipés de convertisseurs d'entrée alternatif-continu. En France, sur la plupart des engins de traction, ce type de convertisseur est un pont mixte. Ces ponts redresseurs sont caractérisés par un fonctionnement en commutation naturelle, ce qui implique une consommation de puissance réactive et une puissance déformante engendrée sur la ligne.

L'adjonction d'un filtre actif à l'entrée des engins de traction afin de réduire les perturbations générées essentiellement par les ponts à commutation naturelle sur l'alimentation fait l'objet de nombreuses études (voir par exemple DE-A-3 725 515). Le principe que l'on envisage d'utiliser consiste à disposer d'une source de courant commandable disposée en parallèle sur la caténaire et capable d'injecter dans celle-ci des courants d'amplitude suffisante. La source de courant commandée pourrait être réalisée par exemple à partir d'un onduleur de tension bouclé en intensité et débitant à travers un enroulement auxiliaire du transformateur de traction. La source de tension continue alimentant l'onduleur doit avoir une amplitude supérieure à la tension crête du secondaire utilisé.

Pour l'instant, ces études n'ont pas abouti à des dispositifs utilisables en pratique. Pour pallier ce manque on propose selon la présente invention un filtre actif présentant de multiples niveaux de tension et dont l'efficacité contre les harmoniques de courant est remarquable.

L'invention a donc pour objet un filtre actif pour le filtrage du courant, et éventuellement l'amélioration du facteur de puissance, d'un engin de traction alimenté sous caténaire monophasée par l'intermédiaire de moyens collecteurs de la tension fournie par la caténaire et distributeurs de tensions d'utilisation aux équipements de traction et aux équipements auxiliaires, caractérisé en ce qu'il comprend un nombre de ponts à commutation forcée et à source de tension supérieur ou égal à 2, les ponts étant branchés en série côté alternatif et étant alimentés par des tensions continues de manière indépendante, le filtre actif comprenant également un système de commande qui force la commutation des ponts de manière à développer côté monophasé un courant alternatif à partir de niveaux différents de tension résultant de la combinaison des valeurs des tensions continues desdits ponts, ce courant développé étant délivré auxdits moyens collecteurs et distributeurs pour compenser les harmoniques engendrées, et éventuellement la puissance réactive consommée, par les équipements de traction et les équipements auxiliaires et retransmis vers la caténaire.

Les moyens collecteurs et distributeurs sont généralement constitués par un transformateur d'entrée. Dans ce cas, le filtre actif peut être branché, côté alternatif :

- soit aux bornes d'un enroulement secondaire du transformateur d'entrée, cet enroulement lui étant réservé,
- soit aux bornes d'un enroulement secondaire d'un transformateur particulier dont le primaire est branché en parallèle sur le primaire du transformateur d'entrée,
- soit en série avec une inductance, l'ensemble étant branché en parallèle sur l'enroulement primaire du transformateur d'entrée,
- soit sur un enroulement secondaire alimentant les équipements de traction ou les équipements auxiliaires, le branchement étant réalisé sur une partie ou sur la totalité de cet enroulement secondaire,
- soit sur une partie de l'enroulement primaire.

Les ponts comprennent avantageusement des branches formées d'interrupteurs statiques bidirectionnels commandés à l'allumage et au blocage.

Ces interrupteurs statiques peuvent comprendre des ensembles formés chacun d'une diode montée tête-bêche avec un transistor IGBT, un transistor MCT ou avec un thyristor GTO.

Dans le cas où le filtre actif comprend deux ponts, l'un d'entre eux peut être alimenté par une tension continue de valeur triple de la tension continue d'alimentation de l'autre pont. L'une de ces tensions continues peut être fournie par un générateur de tension continue et l'autre par un condensateur.

Dans le cas où le filtre actif comprend trois ponts, ceux-ci peuvent être alimentés chacun par une tension continue de même valeur.

L'invention sera mieux comprise et d'autres avantages et particularités apparaîtront à la lecture de la description qui va suivre, donnée à titre d'exemple non limitatif, accompagnée des dessins annexés parmi lesquels :

- la figure 1 représente le transformateur d'entrée d'un engin de traction électrique équipé d'un filtre actif selon l'invention,

- les figures 2 à 5 représentent différentes variantes de disposition du filtre actif selon l'invention par rapport au transformateur d'entrée d'un engin de traction électrique,
- la figure 6 représente le schéma-bloc du système de commande du filtre actif selon l'invention.

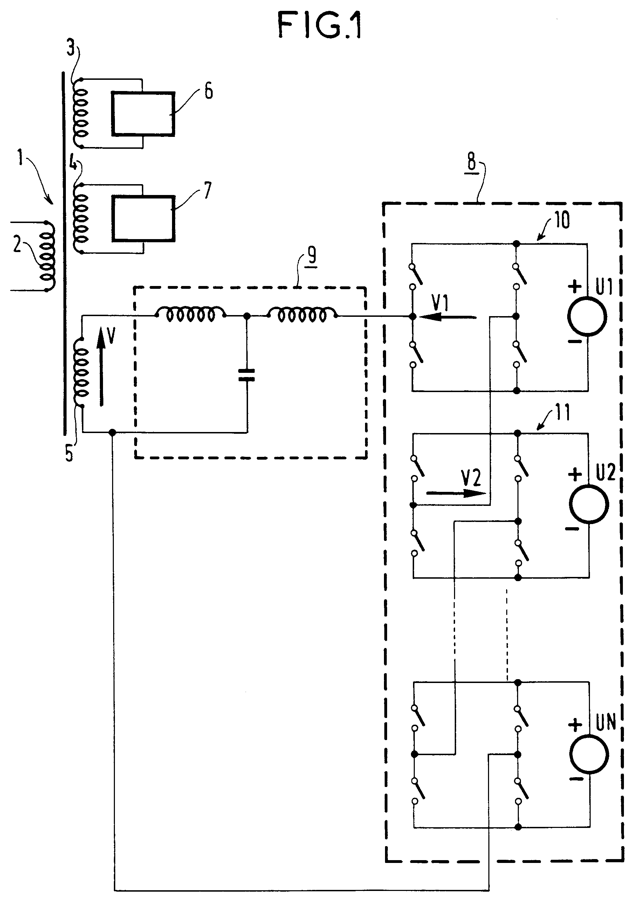

La figure 1 représente, de manière schématique, le transformateur d'entrée 1 d'un engin de traction électrique équipé d'un filtre actif 8 selon l'invention. Le transformateur 1 comprend un enroulement primaire 2 et plusieurs enroulements secondaires 3, 4 et 5. Les enroulements secondaires 3 et 4 sont destinés à alimenter des charges 6 et 7 qui peuvent être des équipements de traction ou des équipements auxiliaires. Des filtres passifs peuvent être branchés respectivement aux bornes des enroulements secondaires 3 et 4. Ils sont par exemple composés chacun d'une inductance et d'un condensateur en série.

L'enroulement secondaire 5 alimente un nombre N de ponts à commutation forcée 10, 11,.... Les ponts sont branchés en série côté alternatif et sont alimentés, de manière indépendante, par des tensions continues $U_1$, $U_2$ ....$U_N$.

Un dispositif de filtrage passif 9 peut éventuellement être rajouté au montage. Il peut être disposé entre l'enroulement secondaire 5 et le filtre actif 8. Il peut être composé de deux selfs branchées en série entre l'une des bornes de l'enroulement secondaire 5 et le filtre actif, un condensateur reliant le point commun aux deux selfs à l'autre borne de l'enroulement secondaire 5.

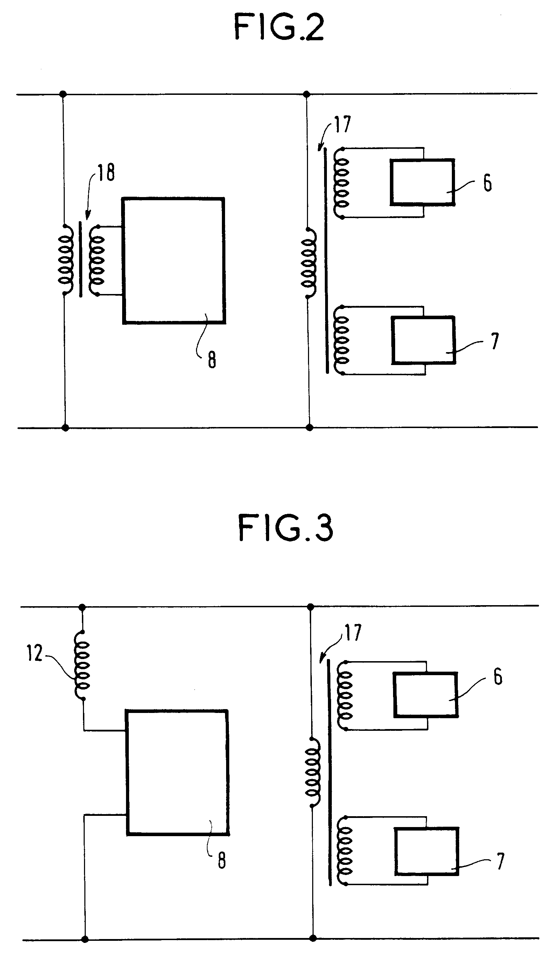

A la figure 2, le transformateur d'entrée 17 alimente les charges 6 et 7. Le filtre actif 8 est branché aux bornes de l'enroulement secondaire d'un transformateur 18 dont l'enroulement primaire est branché en parallèle sur l'enroulement primaire du transformateur d'entrée 17.

A la figure 3, on retrouve le même transformateur d'entrée 17 pour alimenter les charges 6 et 7. Le filtre actif 8 est maintenant branché en série avec une inductance 12. L'ensemble filtre actif-inductance 12 est branché en parallèle sur l'enroulement primaire du transformateur d'entrée.

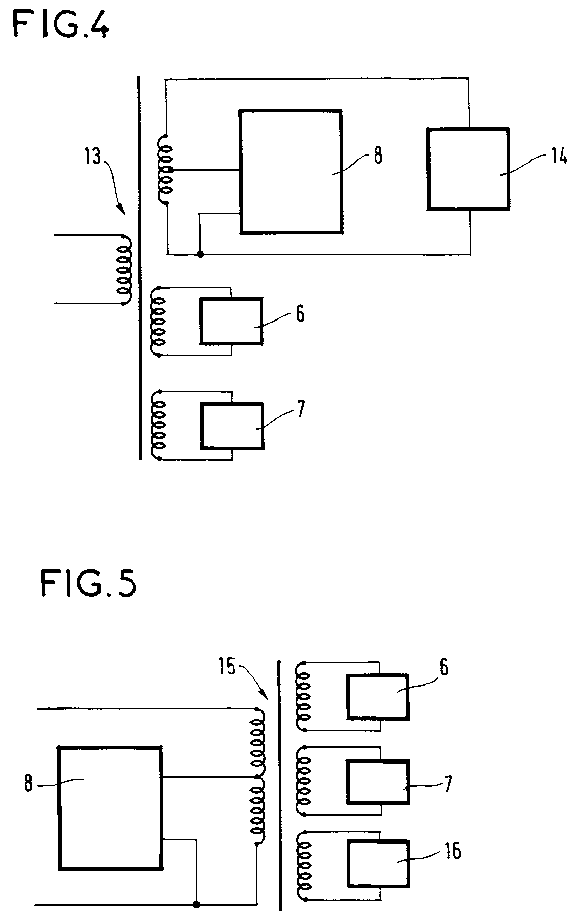

A la figure 4, le transformateur d'entrée 13 possède des enroulements secondaires qui alimentent les charges 6, 7 et 14. Le filtre actif 8 est branché sur une partie de l'enroulement secondaire alimentant la charge 14. Il pourrait le cas échéant être branché sur tout l'enroulement secondaire, c'est-à-dire en parallèle sur la charge 14.

A la figure 5, le transformateur 15 alimente les charges 6, 7 et 16. Le filtre actif 8 est branché sur une partie de l'enroulement primaire du transformateur d'entrée 15.

A titre d'exemple, on va décrire le cas où le filtre actif est formé de deux ponts 10 et 11 (voir la figure 1).

Le pont 11 est alimenté par exemple par une source de tension continue $U_2$, qui peut être celle utilisée par les auxiliaires, et délivrant une tension de valeur U. Le pont 10 est alimenté par une source de tension continue qui peut être un condensateur dont la tension à ses bornes $U_1$ vaut 3 U.

Comme la tension continue aux bornes du pont 11 est relativement faible (par exemple 500 V), il est possible de réaliser ce pont avec des semi-conducteurs formés de transistors IGBT. Ainsi, chaque branche du pont 11 comprend une diode montée tête-bêche avec un transistor. Le pont 11 peut alors fonctionner avec une fréquence de coupure très élevée qui fournit la tension $V_2$ sous trois états : U, O et -U.

La tension continue aux bornes du pont 10 étant élevée (1500 V si U = 500 V), la puissance de ce pont est donc plus importante. On utilise alors des thyristors GTO qui possèdent une contrainte thermique de commutation. Ainsi, chaque branche du pont 10 comprend une diode montée tête-bêche avec un thyristor GTO. Le pont 10 fonctionne avec une fréquence de coupure faible. Il fournit une tension $V_1$ sous trois états possibles : $U_1$, 0 et -$U_1$ avec $U_1$ = 3 U.

La tension $V_s$ appliquée aux bornes de l'enroulement 5 est le résultat d'une combinaison des tensions des deux ponts : $V_s = V_1 + V_2$. Par conséquent, la tension $V_s$ peut prendre neuf états possibles : $U_1$ + U, $U_1$, $U_1$- U, U, O, -U, -$U_1$ + U, -$U_1$ et -$U_1$ - U (avec $U_1$ = 3 U).

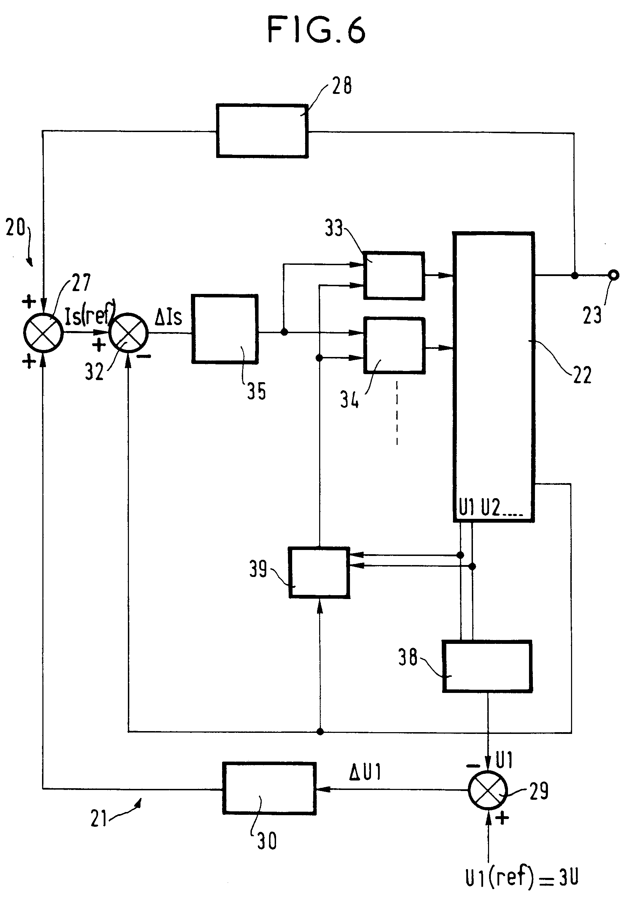

La figure 6 illustre le fonctionnement du système de commande du filtre actif selon l'invention. La régulation du filtre actif se fait par deux boucles : une boucle 20 de traitement des harmoniques et une boucle 21 de régulation de la tension $U_1$ aux bornes du condensateur constituant le générateur alimentant le pont 10.

La boucle 20 est la boucle du filtre actif et concerne le traitement des harmoniques et, éventuellement, l'amélioration du facteur de puissance. Ce traitement sera optimisé en fonction de ce que l'on considère comme prioritaire. Il peut s'agir par exemple du traitement du courant psophométrique (encore appelé courant perturbateur équivalent Ipe).

Le bloc 22 représente la partie électrique de puissance de l'engin de traction : transformateur d'entrée, ponts redresseurs. La référence 23 représente la mesure des courants perturbateurs c'est-à-dire les harmoniques. Les harmoniques sont traitées par le dispositif de traitement 28 qui effectue une transformation de Fourier rapide des données d'entrée, traite les harmoniques en fonction des priorités qu'on lui impose (choix des raies, pondérations) et effectue une transformation de Fourier inverse.

Le spectre du signal est traité numériquement pour établir la référence des harmoniques de courant à compenser. Cette référence de courant est dirigée vers le circuit 27.

La boucle 21 est la boucle de régulation du fondamental du courant dans l'enroulement secondaire du filtre actif. Cette régulation a pour objet de garder la tension $U_1$ constante et égale à sa valeur de référence $U_1$(réf) = 3U.

La boucle 21 comporte la mesure de la tension $U_1$

aux bornes du condensateur et la comparaison de la valeur mesurée à la valeur de référence grâce au comparateur 29.

La différence des valeurs $\Delta U_1$ est appliquée à l'entrée du régulateur proportionnel-intégral 30. On obtient ainsi un courant fondamental dans l'enroulement secondaire du filtre actif. Par conséquent, après redressement par les ponts du filtre actif, il apparait un courant continu qui permet de réguler la tension aux bornes du condensateur.

Le circuit 27 établit la référence de courant du filtre actif, fondamental et harmoniques, soit $I_s(\text{réf})$. Par comparaison, grâce au comparateur 32, entre les courants $I_s(\text{réf})$ et $I_s$ (courant mesuré dans l'enroulement secondaire 5), on obtient une différence de courant $\Delta I_s$ que l'on cherche à annuler.

L'annulation de $\Delta I_s$ sera réalisé par l'intermédiaire des circuits 33 et 34 de commande des ponts respectivement 10 et 11. Ces circuits 33 et 34 sont des blocs logiques et il peut y en avoir autant qu'il y a de ponts. Le régulateur 35 reçoit en entrée la différence de courant $\Delta I_s$ et fournit des ordres à l'ensemble des ponts à commutation forcée.

Le circuit 38 effectue le traitement de la mesure des tensions $U_1$ et $U_2$ (et jusqu'à $U_N$ s'il y a N ponts). Le circuit 39 est un bloc logique qui distingue les états de chaque source de tension $U_1$ et $U_2$ (et éventuellement jusqu'à $U_N$).

L'invention met en oeuvre un nombre réduit de composants ce qui est un élément favorable à la fiabilité, à l'encombrement et à la masse qui sont des critères fondamentaux pour tout matériel embarqué.

## Revendications

1. Filtre actif pour le filtrage du courant, et éventuellement l'amélioration du facteur de puissance, d'un engin de traction alimenté sous caténaire monophasée par l'intermédiaire de moyens collecteurs de la tension fournie par la caténaire et distributeurs de tensions d'utilisation aux équipements de traction et aux équipements auxiliaires (6, 7), caractérisé en ce qu'il comprend un nombre de ponts (10, 11) à commutation forcée et à source de tension supérieur ou égal à 2, les ponts étant branchés en série côté alternatif et étant alimentés par des tension continues de manière indépendante, le filtre actif (8) comprenant également un système de commande qui force la commutation des ponts de manière à développer côté monophasé un courant alternatif à partir de niveaux différents de tension résultant de la combinaison des valeurs des tensions continues desdits ponts, ce courant développé étant délivré auxdits moyens collecteurs et distributeurs pour compenser les harmoniques engendrées, et éventuellement la puissance réactive consommée, par les équipements de traction et les équipements auxiliaires et retransmis vers la caténaire.

2. Filtre actif selon la revendication 1, caractérisé en ce que lesdits moyens collecteurs et distributeurs sont constitués par un transformateur d'entrée.

3. Filtre actif selon la revendication 2, caractérisé en ce qu'il est branché, côté alternatif, aux bornes d'un enroulement secondaire (5) du transformateur d'entrée (1), cet enroulement lui étant réservé.

4. Filtre actif selon la revendication 2, caractérisé en ce qu'il est branché, côté alternatif, aux bornes d'un enroulement secondaire d'un transformateur particulier (18) dont le primaire est branché en parallèle sur le primaire du transformateur d'entrée (17).

5. Filtre actif selon la revendication 2, caractérisé en ce qu'il est branché, côté alternatif, en série avec une inductance (12), l'ensemble étant branché en parallèle sur l'enroulement primaire du transformateur d'entrée (17).

6. Filtre actif selon la revendication 2, caractérisé en ce qu'il est branché, côté alternatif, sur un enroulement secondaire alimentant les équipements de traction ou les équipements auxiliaires (14), le branchement étant réalisé sur une partie ou sur la totalité de cet enroulement secondaire.

7. Filtre actif selon la revendication 2, caractérisé en ce qu'il est branché, côté alternatif, sur une partie de l'enroulement primaire.

8. Filtre actif selon l'une quelconque des revendications 1 à 7, caractérisé en ce que les ponts comprennent des branches formées d'interrupteurs statiques bidirectionnels commandés à l'allumage et au blocage.

9. Filtre actif selon la revendication 8, caractérisé en ce que les interrupteurs statiques comprennent des ensembles formés chacun d'une diode montée tête-bêche avec un transistor IGBT.

10. Filtre actif selon l'une des revendications 8 ou 9, caractérisé en ce que les interrupteurs statiques comprennent des ensembles formés chacun d'une diode montée tête-bêche avec un thyristor GTO.

11. Filtre actif selon l'une quelconque des revendications 8 à 10, caractérisé en ce que les interrupteurs statiques comprennent des ensembles formés chacun d'une diode montée tête-bêche avec un thyristor MCT.

12. Filtre actif selon l'une quelconque des revendications 1 à 11, caractérisé en ce qu'il comprend deux ponts, l'un desdits ponts étant alimenté par une tension continue de valeur triple de la tension continue d'alimentation du deuxième pont.

**13.** Filtre actif selon là revendication 12, caractérisé en ce que les tensions continues alimentant lesdits ponts (10, 11) sont fournies par un générateur de tension continue pour l'un des ponts et par un condensateur pour l'autre pont.

**14.** Filtre actif selon la revendication 13, caractérisé en ce que le système de commande du filtre actif comprend une boucle (20) de traitement des harmoniques et une boucle (21) de régulation de la tension aux bornes dudit condensateur.

**15.** Filtre actif selon l'une quelconque des revendications 1 à 11, caractérisé en ce qu'il comprend trois ponts alimentés chacun par une tension continue de même valeur.

**16.** Filtre actif selon l'une quelconque des revendications précédentes, caractérisé en ce que le système de commande comprend un dispositif de traitement (28) permettant de sélectionner les harmoniques à compenser.

## Claims

**1.** Active filter for filtering the current and optionally improving the power factor of a single-phase overhead contact wire energised locomotive comprising means for collecting the voltage supplied by said overhead contact wire and means for distributing voltages to the traction equipment and auxiliary equipment (6, 7), characterised in that it comprises two or more forced switching mode bridge circuits (10, 11) connected in series on the alternating current side and fed with respective independent direct current voltages, the active filter (8) also comprising a control system which forces switching of said bridge circuits to produce an alternating current on the single-phase side from different voltage levels resulting from combination of the direct current voltages from the bridge circuits, this current being fed to said collecting and distributing means to compensate the harmonic frequencies generated and optionally the reactive power consumed by said traction equipment and said auxiliary equipment and retransmitted to said overhead contact wire.

**2.** Active filter according to claim 1 characterised in that said collecting and distributing means comprise an input transformer.

**3.** Active filter according to claim 2 characterised in that it is connected on the alternating current side to a dedicated secondary winding (5) of the input transformer (1).

**4.** Active filter according to claim 2 characterised in that it is connected on the alternating current side to a secondary winding of a specific transformer (18) the primary winding of which shunts the primary winding of said input transformer (17).

**5.** Active filter according to claim 2 characterised in that it is connected on the alternating current side in series with an inductor (12), said series-connected combination shunting the primary winding of said input transformer (17).

**6.** Active filter according to claim 2 characterised in that it is connected on the alternating current side to all or part of a secondary winding feeding said traction equipment or said auxiliary equipment (14).

**7.** Active filter according to claim 2 characterised in that it is connected on the alternating current side to part of said primary winding.

**8.** Active filter according to any one of claims 1 to 7 characterised in that said bridge circuits comprise branches formed by bidirectional solid state switches with forced on and off switching.

**9.** Active filter according to claim 8 characterised in that said solid state switches each comprise a diode connected in reverse parallel with an IGBT transistor.

**10.** Active filter according to claim 8 or claim 9 characterised in that said solid state switches each comprise a diode connected in reverse parallel with a GTO thyristor.

**11.** Active filter according to any one of claims 8 to 10 characterised in that said solid state switches each comprise a diode connected in reverse parallel with an MCT thyristor.

**12.** Active filter according to any one of claims 1 to 11 characterised in that it comprises two bridge circuits one of which is fed with a direct current voltage whose value is three times that of the direct current voltage feeding the second bridge circuit.

**13.** Active filter according to claim 12 characterised in that the direct current voltages feeding the bridge circuits (10, 11) are provided by a direct current generator for one of said bridge circuits and by a capacitor for the other bridge circuit.

**14.** Active filter according to claim 13 characterised in that said active filter control system comprises a harmonic frequency processor loop (20) and a capacitor voltage control loop (21).

**15.** Active filter according to any one of claims 1 to 11 characterised in that it comprises three bridge circuits each fed by a respective direct current voltage, said three direct current voltages being of the same value.

**16.** Active filter according to any one of the preceding claims characterised in that said control system comprises a processor (28) enabling selection of the harmonic frequencies to be compensated.

**Patentansprüche**

**1.** Aktives Filter für die Stromfilterung und ggf. die Verbesserung des Leistungsfaktors einer Zugmaschine, die aus einer einphasigen Oberleitung gespeist wird, mit Kollektormitteln für die von der Oberleitung gelieferte Spannung und mit Verteilmitteln für die Nutzspannungen an die Zugeinrichtungen und die Hilfseinrichtungen (6, 7), dadurch gekennzeichnet, daß es zwei oder mehr Brücken (10, 11) mit erzwungener Umschaltung und einer Gleichspannungsquelle aufweist, wobei die Brücken auf der Wechselstromseite in Serie geschaltet sind und unabhängig mit Gleichspannungen gespeist werden, und daß das aktive Filter (8) weiter ein Steuersystem aufweist, das die Umschaltung der Brücken derart erzwingt, daß auf der Einphasenseite ein Wechselstrom ausgehend von verschiedenen Spannungspegeln entwickelt wird, die sich aus der Kombination der Gleichspannungswerte der Brücken ergeben, wobei dieser entwickelte Strom an die Kollektor- und Verteilmittel geliefert wird, um die erzeugten Oberwellen und ggf. die durch die Zugeinrichtungen und die Hilfseinrichtungen verbrauchte Blindleistung zu kompensieren und zur Oberleitung zurückzuübertragen.

**2.** Filter nach Anspruch 1, dadurch gekennzeichnet, daß die Kollektor- und Verteilermittel aus einem Eingangstransformator bestehen.

**3.** Filter nach Anspruch 2, dadurch gekennzeichnet, daß es auf der Wechselstromseite an die Klemmen einer Sekundärwicklung (5) des Eingangstransformators (1) angeschlossen ist, wobei diese Wicklung nur hierfür reserviert ist.

**4.** Filter nach Anspruch 2, dadurch gekennzeichnet, daß es auf der Wechselstromseite an die Klemmen einer Sekundärwicklung eines besonderen Transformators (18) angeschlossen ist, dessen Primärwicklung mit der Primärwicklung des Eingangstransformators (17) parallelgeschaltet ist.

**5.** Filter nach Anspruch 2, dadurch gekennzeichnet, daß es auf der Wechselstromseite mit einer Induktanz (12) in Reihe geschaltet ist, wobei die Einheit zur Primärwicklung des Eingangstransformators (17) parallelgeschaltet ist.

**6.** Filter nach Anspruch 2, dadurch gekennzeichnet, daß es auf der Wechselstromseite an eine Sekundärwicklung angeschlossen ist, die die Zugeinrichtungen oder die Hilfseinrichtungen (14) speist, wobei der Anschluß über einen Teil oder die Gesamtheit dieser Sekundärwicklung hergestellt wird.

**7.** Filter nach Anspruch 2, dadurch gekennzeichnet, daß es auf der Wechselstromseite an einen Teil der Primärwicklung angeschlossen ist.

**8.** Filter nach einem beliebigen der Ansprüche 1 bis 7, dadurch gekennzeichnet, daß die Brücken aus statischen bidirektionalen Schaltern gebildete Zweige enthalten, die in Zünd- und Sperrichtung gesteuert werden.

**9.** Filter nach Anspruch 8, dadurch gekennzeichnet, daß die statischen Schalter Einheiten aufweisen, die je aus einer mit einem IGBT-Transistor gegenpolig parallelgeschalteten Diode gebildet werden.

**10.** Filter nach einem der Ansprüche 8 und 9, dadurch gekennzeichnet, daß die statischen Schalter Einheiten aufweisen, die je aus einer mit einem GTO-Thyristor gegenpolig parallelgeschalteten Diode gebildet werden.

**11.** Filter nach einem der Ansprüche 8 bis 10, dadurch gekennzeichnet, daß die statischen Schalter Einheiten aufweisen, die je aus einer mit einem MCT-Thyristor gegenpolig parallelgeschalteten Diode gebildet werden.

**12.** Filter nach einem beliebigen der Ansprüche 1 bis 11, dadurch gekennzeichnet, daß es zwei Brücken aufweist, von denen eine mit einer Gleichspannung des dreifachen Werts der Speise-Gleichspannung der anderen Brücke gespeist wird.

**13.** Filter nach Anspruch 12, dadurch gekennzeichnet, daß die die Brücken (10, 11) speisenden Gleichspannungen für die eine Brücke von einem Gleichspannungsgenerator und für die andere Brücke von einem Kondensator geliefert werden.

**14.** Filter nach Anspruch 13, dadurch gekennzeichnet, daß das Steuersystem des Filters eine Schleife (20) zur Verarbeitung der Oberwellen und eine Schleife (21) zur Regelung der Spannung an den Klemmen des Kondensators aufweist.

**15.** Filter nach einem beliebigen der Ansprüche 1 bis 11, dadurch gekennzeichnet, daß es drei Brücken aufweist, die je mit einer Gleichspannung gleichen Werts gespeist werden.

**16.** Filter nach einem beliebigen der vorhergehenden Ansprüche, dadurch gekennzeichnet, daß das Steuersystem eine Verarbeitungsvorrichtung (28) aufweist, die die Auswahl der zu kompensierenden Oberwellen erlaubt.

# FIG.1

# FIG.2

# FIG.3

# FIG.4

# FIG.5

# FIG.6